# EUROPÄISCHE PATENTSCHRIFT

(11) **EP 0 748 036 B1**
(45) Veröffentlichungstag und Bekanntmachung des Hinweises auf die Patenterteilung: **24.01.2001**
(21) Anmeldenummer: 96810321.8
(22) Anmeldetag: 22.05.1996
(51) Int. Cl.: H02M 7/519

(54) **Vorrichtung zur Erfassung des Durchzündens der Schalter einer Stromrichterschaltungsanordnung**
Device for turn-on detection of the switches of a power converter
Dispositif pour la détection de l'amorçage des interrupteurs d'un convertisseur de puissance

(30) Priorität: 09.06.1995 DE 19521108
(43) Veröffentlichungstag der Anmeldung: 11.12.1996
(73) Patentinhaber: ABB Industrie AG, 5400 Baden (CH)
(72) Erfinder: Schilling, Robert, 5401 Baden (CH)
(74) Vertreter: ABB Patent Attorneys

(56) Entgegenhaltungen:
- US-A- 4 170 037
- US-A- 4 263 646
- US-A- 4 336 584
- US-A- 4 686 618
- US-A- 4 969 081

## Beschreibung

### Technisches Gebiet

Die Erfindung bezieht sich auf das Gebiet der Leistungselektronik. Sie geht aus von einer Vorrichtung zur Erfassung des Durchzündens der Schalter einer Stromrichterschaltungsanordnung nach dem Oberbegriff des ersten Anspruchs.

### Stand der Technik

Stromrichterschaltungsanordnungen, für welche die Vorrichtung nach der Erfindung verwendet werden kann, umfassen im allgemeinen einen Gleichspannungs- oder Gleichstromzwischenkreis, an welche eine Anzahl von Zweigen oder Phasen mit Halbleiterschaltern angeschlossen sind. Die Halbleiterschalter eines Zweiges bilden einen Lastanschluss und sie werden abwechselnd ein- und ausgeschaltet, derart, dass am Lastanschluss eine Wechselspannung z.B. variabler Frequenz auftritt. Aufgrund eines Fehlers, z.B. in der Ansteuerung, können alle Schalter eines Zweiges durchgezündet werden. Dies zieht ein kurzschlussartiges Entladen des Zwischenkreises über die Schalter, im allgemeinen GTOs, nach sich. Dadurch tritt ein unzulässig hoher Strom auf, welcher die Anordnung und insbesondere auch die GTOs zerstören kann. Aus diesem Grund muss das Durchzünden einer Phase möglichst sicher und möglichst früh erkannt werden. Falls dies gelingt, kann ein Schutzzünden eingeleitet werden, welches den durchgezündeten Zweig entlastet.

Nach dem Stand der Technik wird die Erfassung des Durchzündens durch eine Überwachung der Anoden-Kathoden-Spannung gewährleistet. Eine andere Möglichkeit der Erfassung des Durchzündens ist in der US 4,686,618 offenbart. Darin ist im Hauptstrompfad zwischen den GTOs eine Strombegrenzungsdrossel vorgesehen, die mit einer Leiterschleife magnetisch gekoppelt ist, wobei die Leiterschleife der Detektion eines Überstromes dient, der von einer mit der Leiterschleife verbundenen Detektionsschaltung erfasst wird.

Da die Erfassung des Durchzündens von grundlegende Bedeutung für die Sicherheit einer Stromrichteranlage ist, sollte die Erfassung wenn möglich redundant ausgeführt sein. Dabei sollten die beiden Erfassungssystem elektrisch möglichst unabhängig von einander sein.

### Darstellung der Erfindung

Aufgabe der vorliegenden Erfindung ist es deshalb, eine Vorrichtung zur Erfassung des Durchzündens der Schalter einer Stromrichterschaltungsanordnung anzugeben, welche elektrisch von Stromrichterschaltungsanordnung entkoppelt ist und unabhängig von dieser arbeitet.

Diese Aufgabe wird bei einer Vorrichtung der eingangs genannten Art durch die Merkmale des ersten Anspruchs gelöst.

Die erfindungsgemässe Vorrichtung ist magnetisch mit der Strombegrenzungsdrossel gekoppelt und umfasst Mittel zur Detektion einer Spannung, welche beim Durchzünden der Schalter in der Strombegrenzungsinduktivität induziert wird.

Die Detektionsmittel umfassen vorzugsweise eine Leiterschleife, welche mit einer Detektionsschaltung verbunden ist. Besonders vorteilhaft an dieser Anordnung ist, dass die induzierte Spannung gleichzeitig als Speisung der Detektionsschaltung verwendet werden kann. Die Leiterschleife wird am besten an der Stirnseite der Strombegrenzungsdrossel angeordnet. Um die Vorrichtung vor Einflüssen des elektrischen Feldes abzuschirmen, kann ausserdem eine Abschirmung vorgesehen werden. Sowohl Abschirmung wie Leiterschleife werden mit Vorteil auf einer Printplatte angeordnet.

Die Detektionsschaltung kann beispielsweise eine Schwellwertschaltung, welche über einen Abschlusswiderstand an die Leiterschleife angeschlossen ist, umfassen. Die Schwellwertschaltung ihrerseits ist mit einer Konstantstromquelle verbunden, welche eine mit einer Auswertelogik optisch gekoppelte Photodiode speist.

Weitere Ausführungsbeispiele ergeben sich aus den entsprechenden abhängigen Ansprüchen.

Von besonderem Vorteil ist bei der vorliegenden Erfindung, dass die Vorrichtung elektrisch unabhängig von der Stromrichterschaltungsanordnung betrieben werden kann. Sie kann dabei sowohl als redundante Durchzünderfassung zusammen beispielsweise mit einer Anoden-Kathoden-Spannungsüberwachung als auch alleine betrieben werden.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Schaltschema einer Stromrichterschaltungsanordnung, für welche die erfindungsgemässe Vorrichtung verwendet werden kann;
- **Fig. 2**: Eine Stromanstiegsbegrenzungsdrossel mit an der Stirnseite angebrachter, erfindungsgemässer Vorrichtung;
- **Fig. 3**: Die Ansicht einer Printplatte mit der erfindungsgemässen Leiterschleife
- **Fig. 4**: Die Rückseite der in Figur 3 dargestellten Printplatte mit einer elektrischen Abschirmung;
- **Fig. 5**: Ein Schaltschema einer Detektionsschaltung, welche für die Erfindung geeignet ist.

Die in den Zeichnungen verwendeten Bezugszeichen und deren Bedeutung sind in der Bezeichnungsliste zusammengefasst aufgelistet. Grundsätzlich sind in den Figuren gleiche Teile mit gleichen Bezugszeichen versehen.

### Wege zur Ausführung der Erfindung

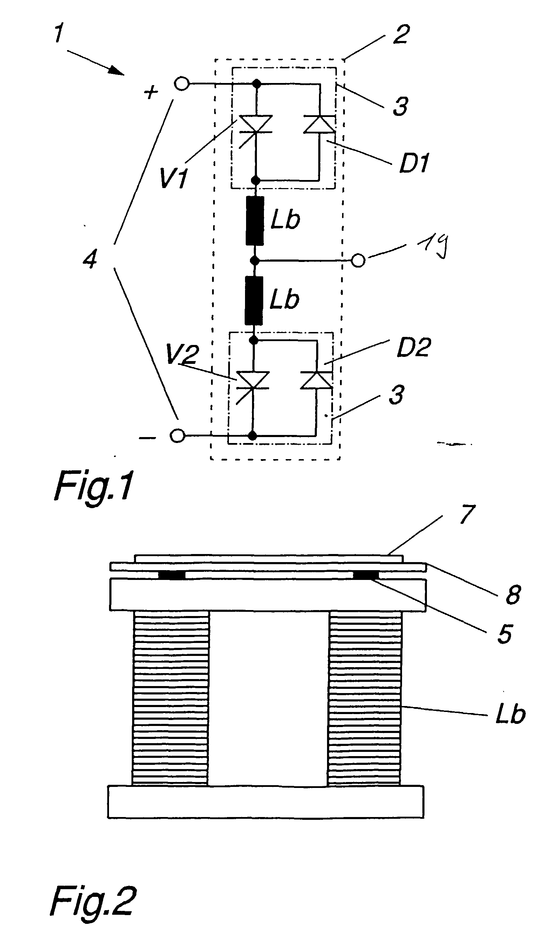

Figur 1 zeigt ein Schaltschema einer Stromrichterschaltungsanordnung 1, für welche die Erfindung mit Vorteil eingesetzt werden kann. Die Schaltungsanordnung umfasst einen Gleichspannungs- oder Gleichstromzwischenkreis 4, an welchen mindestens ein Zweig oder eine Phase 2 angeschlossen ist. Jeder Zweig 2 umfasst eine Anzahl Schalter 3, dargestellt sind zwei, welche in diesem Ausführungsbeispiel je einen GTO V1 oder V2 mit antiparallel geschalteter Diode D1 bzw. D2 aufweisen. Die Erfindung ist aber nicht notwendigerweise auf GTOs mit Antiparalleldioden beschränkt. Zwischen den GTOs V1 und V2 ist mindestens eine Strombegrenzungsdrossel Lb vorgesehen. Der Knoten zwischen den beiden Strombegrenzungsdrosseln bildet einen Lastanschluss 19, an welchen eine Last, z.B. ein Motor oder ein anderer Verbraucher angeschlossen werden kann. Die Stromanstiegsbegrenzungsdrossel muss nicht unbedingt wie dargestellt zwei Spulen umfassen, sondern eine einzige mit Mittelabgriff für den Lastanschluss würde die geforderte Funktion ebenfalls erfüllen. Ganz allgemein können auch mehrere Phasen oder Zweige 2 vorgesehen werden, welche ein mehrphasiges Spannungssystem bilden.

Die Funktionsweise der in Figur 1 dargestellten Schaltungsanordnung wird als bekannt vorausgesetzt und an dieser Stelle nicht weiter erläutert.

Bei derartigen Schaltungen können in Folge eines Fehlers alle Schalter 3 eines Zweiges 2 gleichzeitig leiten. Man spricht in diesem Fall von sogenanntem "Durchzünden" des Zweiges. Die im Zwischenkreis 4 gespeicherte Energie entlädt sich dann kurzschlussartig über die Schalter und kann diese aufgrund der zu hohen Strombelastung zerstören. Um diesen Fehler zu entdecken und durch eine Entlastungszündung zu beheben, ist es wichtig, dass das Durchzünden sicher erkannt wird.

Die erfindungsgemässe Vorrichtung ist dafür bestens geeignet und umfasst eine Leiterschleife 5, welche vorzugsweise an der Stirnseite der Strombegrenzungsdrossel Lb angeordnet ist (siehe Figur 2). Die Leiterschleife ist mit der Drossel Lb über eine Gegeninduktivität M magnetisch gekoppelt. Sie wird von praktisch demselben Fluss durchflossen. Aufgrund des Durchzündens ergibt sich in der Drossel Lb eine Stromänderung und damit eine Flussänderung. Diese Flussänderung induziert nach dem Induktionsgesetz in der Leiterschleife 5 eine Spannung. Diese Spannung kann in einer mit der Schleife 5 verbundenen Detektionsschaltung 6 erfasst und in einer nachgeschalteten, aus Gründen der Übersichtlichkeit nicht dargestellten Auswerteschaltung ausgewertet werden.

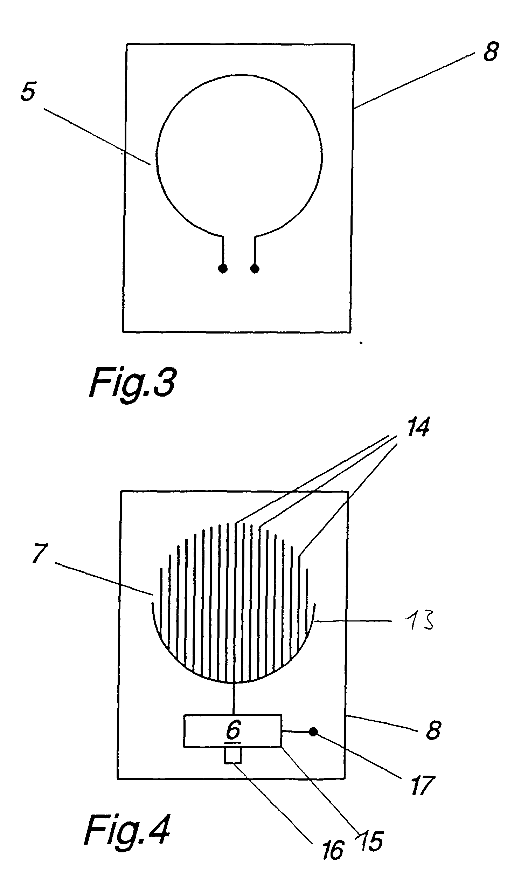

Die induzierte Spannung entspricht dem Produkt der Gegeninduktivität und der Flussänderung. Wenn also die Gegeninduktivität möglichst gross ist, erhält man einen grossen Spannungswert. Die Gegeninduktivität wird dadurch möglichst gross gemacht, dass der Abstand zwischen der Drossel Lb und der Leiterschleife 5 möglichst klein gewählt wird. Dies wird mit Vorteil durch eine auf einer dünnen, beispielsweise aus Kunststoff bestehenden Printplatte 8, auf welche die Leiterschleife aufgebracht ist, erreicht (Figur 3).

Um den Einfluss störender elektrischer Felder auf die Messung zu minimieren, kann auf der anderen Seite der Printplatte 8 eine Abschirmung 7 aufgebracht werden. Diese umfasst, wie in Figur 4 dargestellt ist, eine Anzahl von parallelen Leiterbahnen 14, welche über einen Steg 13 zusammengefasst sind. Die dargestellte kreisrunde Anordnung ist für die Erfindung nicht unbedingt notwendig hat aber im Hinblick auf eine entsprechend geformte Leiterschleife 5 Vorteile. Die Form der Leiterschleife 5 ist im übrigen auch nicht relevant. Die Abschirmung stellt für die Detektionsschaltung 6 gerade auch noch das Bezugspotential dar. Der Steg 13 wird zu diesem Zweck über einen Potentialanschluss 17 mit der Leiterschleife 5 verbunden. Um die Detektionsschaltung 6 vor störenden magnetischen Feldern zu schützen, ist sie in ein elektrisch leitendes Gehäuse 15 eingebaut. Mit Vorteil wird die Schaltung 6 mit dem Gehäuse 15 ebenfalls auf der Printplatte 8 angeordnet.

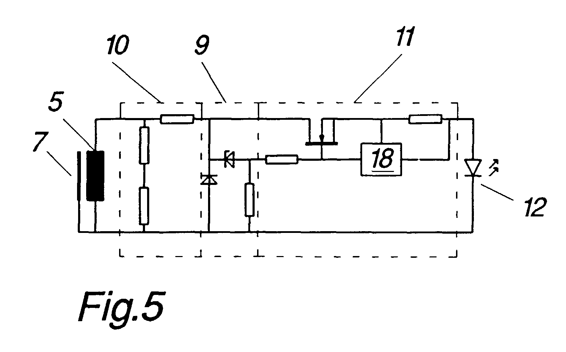

Die Detektionsschaltung umfasst, wie ein Figur 5 beispielhaft dargestellt wird, einen Abschlusswiderstand 10, an welchen eine Schwellwertschaltung 9 angeschlossen ist. Die Schwellwertschaltung 9 ist notwendig, damit die Detektionsschaltung im Normalbetrieb, in welche ja auch Flussänderungen in der Drossel Lb auftreten, z.B. bei der Kommutierung, nicht anspricht. Der Abschlusswiderstand 10 kann beispielsweise durch ein Netzwerk von Widerständen und die Schwellwertschaltung 9 durch ein Netzwerk von Widerständen und einer Zenerdiode gebildet werden. Diese Schwellwertschaltung 9 ist mit einer Konstantstromquelle 11 verbunden, welche eine Photodiode 12 treibt. Die Konstantstromquelle 11 dient dem Zweck, dass die Photodiode 12 unabhängig von der Höhe des induzierten Spannungsimpulses immer mit dem gleichen Strom betrieben wird. Dies erlaubt einer längere Lebensdauer der Photodiode 12. Die Konstantstromquelle kann beispielsweise einen Spannungsregler 18 und einen Feldeffekttransistor umfassen. Um die induzierte Spannung auszuwerten, ist eine nicht dargestellte Auswertelogik vorgesehen, welche mit der Detektionsschaltung 6 über die Phototdiode optisch gekoppelt ist. Zu diesem Zweck wird ein Lichtwellenleiteranschluss 16 vorgesehen.

Die in der Leiterschleife 5 induzierte Spannung wird also durch die Detektionsschaltung 6 in einen Spannungspuls umgewandelt. Die Länge des Spannungspulses kann ausgewertet werden. Bei der normalen Kommutierung wird ein Puls von einer Dauer von ca. 10 µs erzeugt. Beim Durchzünden dauert dieser viel länger (> 50 µs). In der Auswertelogik wird also die Dauer des erzeugten Spannungspulses überwacht und im Falle eines in Folge Durchzünden erzeugten und damit vergleichsweise langen Impulses eine Entlastungszündung ausgelöst.

Der immer wiederkehrende Kommutierungspuls wird mit Vorteil zur Funktionsüberwachung der Durchzünderfassung verwendet. Auf diese Weise kann sehr einfach überprüft werden, ob die Durchzünderfassung bereit für ein Auslösen einer allfälligen Entlastungszündung ist.

Für die Speisung der Detektionsschaltung wird die induzierte Spannung verwendet, so dass keine spezielle Spannungsversorgung benötigt wird. Dies erlaubt einen kompakten und einfachen Aufbau der Detektionsschaltung.

Die Erfindung erlaubt also eine zuverlässige, elektrisch von der Stromrichterschaltungsanordnung getrennte Erfassung des Durchzündens der Schalter. Sie kann sowohl alleine oder als redundante Durchzünderfassung eingesetzt werden. Die erfindungsgemässen Vorrichtung kann auf einfache Weise mit der Strombegrenzungsdrossel integriert werden und ist sehr kostengünstig herzustellen.

### Bezeichnungsliste

- 1: Stromrichterschaltungsanordnung
- 2: Zweig, Phase
- 3: Schalter
- 4: Zwischenkreis
- 5: Leiterschleife
- 6: Detektionsschaltung
- 7: Abschirmung
- 8: Printplatte
- 9: Schwellwertschaltung
- 10: Abschlusswiderstand
- 11: Konstantstromquelle
- 12: Photodiode
- 13: Steg
- 14: Leiterbahn
- 15: Gehäuse der Detektionsschaltung
- 16: Lichtwellenleiteranschluss
- 17: Potentialanschluss
- 18: Spannungsregler
- 19: Lastanschluss
- D1, D2: Dioden
- V1, V2: Schalter, GTO
- Lb: Strombegrenzungsdrossel

## Patentansprüche

1. Vorrichtung zur Erfassung des Durchzündens der Schalter (3) einer Stromrichterschaltungsanordnung (1) mit mindestens einem Zweig (2) mit den Schaltern (3), welcher Zweig (2) an einen Gleichspannungs- oder einen Gleichstromzwischenkreis (4) angeschlossen ist, wobei die Schalter (3) des oder jedes Zweiges (2) mittels einer mit den Schaltern (3) in Serie geschalteten Strombegrenzungsdrossel (Lb) vor zu steilen Stromflanken geschützt werden und die Vorrichtung
(a) magnetisch mit der Strombegrenzungsdrossel (Lb) gekoppelt ist und
(b) Mittel (5,6) zur Detektion einer beim Durchzünden der Schalter (3) in der Strombegrenzungsdrossel (Lb) induzierten Spannung umfasst, wobei
(c) die Detektionsmittel (5,6) eine Leiterschleife (5) umfassen, welche mit einer Detektionsschaltung (6) verbunden ist,
dadurch gekennzeichnet,
dass die Detektionsschaltung (6) von der induzierten Spannung gespeist ist.

2. Vorrichtung nach Anspruch 1, dadurch gekennzeichnet, dass die Leiterschleife (5) an der Stirnseite der Strombegrenzungsdrossel (Lb) angeordnet ist.

3. Vorrichtung nach einem der Ansprüche 1 oder 2, dadurch gekennzeichnet, dass Mittel (7, 13, 14) zur elektrischen Abschirmung der Detektionsmittel (5,6) vorgesehen sind und dass die Detektionsmittel (5,6) zwischen den Abschirmmitteln (7, 13, 14) und der Stirnseite der Strombegrenzungsdrossel (Lb) angeordnet sind.

4. Vorrichtung nach einem der Ansprüche 1-3, dadurch gekennzeichnet, dass die Leiterschleife (5) auf einer Printplatte (8) angeordnet ist.

5. Vorrichtung nach einem der Ansprüche 1-4, dadurch gekennzeichnet, dass die Detektionsschaltung (6) eine Schwellwertschaltung (9), welche über einen Abschlusswiderstand (10) an die Leiterschleife (5) angeschlossen ist, eine nachgeschaltete Konstantstromquelle (11) sowie eine von der Konstantstromquelle (11) gespeiste Photodiode (12) umfasst, wobei die Photodiode (12) optisch mit einer Auswertelogik gekoppelt ist.

6. Vorrichtung nach Anspruch 3 dadurch gekennzeichnet, dass die Abschirmmittel (7, 14, 13)) auf der der Leiterschleife (5) gegenüberliegenden Seite der Printplatte (8) angeordnet sind.

7. Vorrichtung nach Anspruch 6, dadurch gekennzeichnet, dass die Abschirmmittel (7) eine Vielzahl von über einen Steg (13) verbundenen, parallelverlaufenden Leiterbahnen (14) umfasst, wobei der Steg (13) elektrisch das Bezugspotential für die Detektionsschaltung (6) bildet.

## Claims

1. Apparatus for detecting the switching-on of the switches (3) in a converter circuit arrangement (1) having at least one path (2) with the switches (3), which path (2) is connected to a DC voltage or direct-current intermediate circuit (4), in which case the switches (3) in the or each path (2) are protected against excessively steep current rates of change by a current limiting inductor (Lb) connected in series with the switches (3), and the apparatus
(a) is magnetically coupled to the current limiting inductor (Lb), and
(b) comprises means (5, 6) for detection of a voltage which is induced in the current limiting inductor (Lb) when the switches (3) are switched on, in which case
(c) the detection means (5, 6) comprise a conductor loop (5) which is connected to a detection circuit (6),
characterized
in that the detection circuit (6) is fed with the induced voltage.

2. Apparatus according to Claim 1, characterized in that the conductor loop (5) is arranged on the end face of the current limiting inductor (Lb).

3. Apparatus according to one of Claims 1 or 2, characterized in that means (7, 13, 14) are provided for electrical screening of the detection means (5, 6), and in that the detection means (5, 6) are arranged between the screening means (7, 13, 14) and the end face of the current limiting inductor (Lb).

4. Apparatus according to one of Claims 1-3, characterized in that the conductor loop (5) is arranged on a printed circuit board (8).

5. Apparatus according to one of Claims 1-4, characterized in that the detection circuit (6) comprises a threshold circuit (9) which is connected to the conductor loop (5) via a terminating resistor (10), a downstream constant current source (11), and a photodiode (12) fed from the constant current source (11), with the photodiode (12) being optically coupled to an evaluation logic device.

6. Apparatus according to Claim 3, characterized in that the screening means (7, 14, 13) are arranged on the side of the printed circuit board (8) opposite the conductor loop (5).

7. Apparatus according to Claim 6, characterized in that the screening means (7) comprise a large number of parallel-running conductor tracks (14) connected via a web (13), with the web (13) electrically forming the reference-earth potential for the detection circuit (6).

## Revendications

1. Dispositif pour la détection de l'amorçage des interrupteurs (3) d'un convertisseur de puissance (1) avec au moins une branche (2) qui contient les interrupteurs (3), branche (2) qui est raccordée à un circuit intermédiaire (4) à tension continue ou à courant continu, dans lequel les interrupteurs (3) de la ou de chaque branche (2) sont protégés contre des augmentations de courant trop abruptes au moyen d'une inductance de protection (Lb) montée en série avec les interrupteurs (3), et où le dispositif
(a) est couplé magnétiquement à l'inductance de protection (Lb) et
(b) comprend des moyens (5, 6) pour la détection d'une tension induite dans l'inductance de protection (Lb) lors de l'amorçage des interrupteurs (3), dans lequel
(c) les moyens de détection (5, 6) comprennent une boucle conductrice (5), qui est raccordée à un circuit de détection (6),
caractérisé en ce que le circuit de détection (6) est alimenté par la tension induite.

2. Dispositif suivant la revendication 1, caractérisé en ce que la boucle conductrice (5) est disposée sur la face frontale de l'inductance de protection (Lb).

3. Dispositif suivant l'une ou l'autre des revendications 1 ou 2, caractérisé en ce qu'il est prévu des moyens (7, 13, 14) pour le blindage électrique des moyens de détection (5, 6), et en ce que les moyens de détection (5, 6) sont disposés entre les moyens de blindage (7, 13, 14) et la face frontale de l'inductance de protection (Lb).

4. Dispositif suivant l'une quelconque des revendications 1 à 3, caractérisé en ce que la boucle conductrice (5) est disposée sur une plaquette de circuits imprimés (8).

5. Dispositif suivant l'une quelconque des revendications 1 à 4, caractérisé en ce que le circuit de détection (6) comporte un circuit de seuil (9), qui est raccordé à la boucle conductrice (5) par une résistance terminale (10), une source de courant constant (11) aval ainsi qu'une photodiode (12) alimentée par la source de courant constant (11), la photodiode (12) étant optiquement couplée à une logique d'évaluation.

6. Dispositif suivant la revendication 3, caractérisé en ce que les moyens de blindage (7, 14, 13) sont disposés sur la face de la plaquette de circuits imprimés (8) située à l'opposé de la boucle conductrice (5).

7. Dispositif suivant la revendication 6, caractérisé en ce que les moyens de blindage (7) comportent une pluralité de pistes conductrices (14) parallèles reliées par une nervure (13), la nervure (13) constituant, au point de vue électrique, le potentiel de référence pour le circuit de détection (6).
